# EUROPÄISCHE PATENTANMELDUNG

(11) **EP 1 628 003 A1**
(43) Veröffentlichungstag der Anmeldung: **22.02.2006**
(21) Anmeldenummer: 05106391.5
(22) Anmeldetag: 13.07.2005
(51) Int. Cl.: F02B 27/02

(54) **Ansaugvorrichtung für eine Kolbenbrennkraftmaschine**

(30) Priorität: 21.08.2004 DE 102004040594
(71) Anmelder: ROBERT BOSCH GMBH, 70442 Stuttgart (DE)
(72) Erfinder: Baeuerle, Michael, 71254, Ditzingen-Heimerdingen (DE)

(57) **Zusammenfassung**

Die Erfindung betrifft eine Ansaugvorrichtung (1) für eine Kolbenbrennkraftmaschine mit mehreren Zylindern (4), beinhaltend wenigstens einen hinsichtlich der Länge des Ansaugweges der Ansaugluft variablen Ansaugkanal (6).

Die Erfindung sieht vor, dass ein Teil (12) des Ansaugkanals (6) axial spiralförmig gewunden, mit über eine Windung hinausgehender Länge und im Querschnitt schneckenförmig ausgebildet ist, wobei koaxial zu einer bezogen auf die Windungen mittigen Achse (20) ein hohler, als weiterer Teil des Ansaugkanals (6) Ansaugluft führender und mit einer Durchgangsöffnung (22) in seiner Mantelwand versehener Drehschieber (24) um die mittige Achse (20) drehbar und zugleich in Richtung der mittigen Achse (20) derart axial verstellbar ausgebildet ist, dass die Durchgangsöffnung (22) des Drehschiebers (24) dem gewundenen Teil (12) des Ansaugkanals (6) zur Herstellung einer Strömungsverbindung ausgehend von einer Ausgangsstellung, in welcher der Strömungsweg der Ansaugluft am längsten ist bis zu einer Endstellung, in welcher der Strömungsweg der Ansaugluft am kürzesten ist, nachführbar ist.

## Beschreibung

### Stand der Technik

Die Erfindung betrifft eine Ansaugvorrichtung für eine Kolbenbrennkraftmaschine mit mehreren Zylindern, beinhaltend wenigstens einen hinsichtlich der Länge des Ansaugweges der Ansaugluft variablen Ansaugkanal, gemäß dem Oberbegriff von Anspruch 1.

Das erreichbare Drehmoment einer Brennkraftmaschine hängt auch vom Frischgasanteil der Zylinderfüllung ab und kann innerhalb gewisser Grenzen gesteigert werden, indem die Luft vor Eintritt in den Zylinder verdichtet wird. Die Ladungswechselvorgänge werden dabei auch durch die Saug- und Abgasleitung beeinflusst. Angeregt durch die Saugarbeit des Kolbens löst das sich öffenende Einlassventil eine zurücklaufende Druckwelle aus. Am offenen Ende des Saugrohres trifft die Druckwelle auf ruhende Umgebungsluft, wird dort reflektiert und läuft wieder zurück in Richtung Einlassventil. Die dadurch entstehenden Druckschwankungen am Einlassventil können ausgenutzt werden, um die Frischgasfüllung zu vergrößern und damit das Drehmoment zu steigern. Bei der sog. Schwingrohraufladung hat jeder Zylinder ein gesondertes Einzelschwingrohr bestimmter Länge, das meist an einen Sammelbehälter angeschlossen ist. In diesen Schwingrohren können sich die Druckwellen unabhängig voneinander ausbreiten. Länge und Durchmesser der Einzelschwingrohre werden deshalb auf die Ventilsteuerzeiten abgestimmt, dass im gewünschten Drehzahlbereich eine am Ende des Schwingrohrs reflektierte Druckwelle durch das geöffnete Einlassventil des Zylinders läuft und somit eine bessere Füllung ermöglicht.

Einen anderen physikalischen Effekt zur Verbesserung der Füllung nutzt die sog. Resonanzaufladung, bei welcher die Gasschwingungen im Saugrohr bei einer bestimmten Motordrehzahl angeregt durch die periodische Kolbenbewegung in Resonanz geraten. Bei Resonanzsaugrohrsystemen wird eine Gruppe von Zylindern mit gleichen Zündabständen über kurze Saugrohre an einen als Helmholtz-Resonator wirkenden Resonanzbehälter angeschlossen, welcher über ein Resonanzsaugrohr mit der Atmosphäre bzw. mit einem Sammelbehälter verbunden ist. Es ergibt sich eine stehende Welle durch alle Zylinder der Zylindergruppe, welche zu einer zusätzlichen Drucksteigerung in den Zylindern führt. Die erforderliche Saugrohrlänge ist durch die permanente und höherfrequente Daueranregung deutlich geringer als bei der Schwingrohraufladung. Darüber hinaus ist ein Saugrohr je Zylindergruppe ausreichend.

Die zusätzliche Füllung durch die beiden oben genannten Möglichkeiten der dynamischen Aufladung hängen vom Betriebspunkt des Motors ab. Einen nahezu idealen Drehmomentverlauf ermöglicht eine variable Saugrohrgeometrie, bei welcher z.B. über Klappen in Abhängigkeit vom jeweiligen Motorbetriebspunkt die Schwingsaugrohrlänge verändert wird.

Eine gattungsgemäße Vorrichtung ist beispielsweise aus der DE 195 06 306 A1 bekannt, bei welcher im Rahmen einer Schwingrohraufladung ein Einzelsaugrohr mit einem Ansaugverteilerraum offenbart wird, der einen kreisförmigen Querschnitt hat und in dem ein innerhalb einer Zylinderwand drehbar geführter Drehschieber mit einer Durchgangsöffnung vorgesehen ist, die mit Durchbrüchen in der Zylinderwand in Überdeckung bringbar ist. Je nach Drehstellung des Drehschiebers sind folglich unterschiedliche Schwingrohrlängen darstellbar.

Vor allem bei turboaufgeladenen Brennkraftmaschinen ergibt sich aufgrund der relativ geringen Abgasströmung bei niedrigen Drehzahlen in Kombination mit der Laderträgheit das Problem eines unbefriedigenden Ansprechverhaltens. Gerade bei solchen Motoren kommt folglich der Wunsch nach einer Verbesserung der Füllung im unteren Drehzahlbereich auf.

### Vorteile der Erfindung

Indem ein Teil des Ansaugkanals axial spiralförmig gewunden, mit über eine Windung hinausgehender Länge und im Querschnitt schneckenförmig ausgebildet ist, wobei koaxial zu einer bezogen auf die Windungen mittigen Achse ein hohler, als weiterer Teil des Ansaugkanals Ansaugluft führender und mit einer Durchgangsöffnung in seiner Mantelwand versehener Drehschieber um die mittige Achse drehbar und zugleich in Richtung der mittigen Achse derart axial verstellbar ausgebildet ist, dass die Durchgangsöffnung des Drehschiebers dem gewundenen Teil des Ansaugkanals zur Herstellung einer Strömungsverbindung ausgehend von einer Ausgangsstellung, in welcher der Strömungsweg der Ansaugluft am längsten ist bis zu einer Endstellung, in welcher der Strömungsweg der Ansaugluft am kürzesten ist, nachführbar ist, ergibt sich eine wesentliche größere Variabilität hinsichtlich des Verstellbereichs der Länge des Strömungsweges. Denn der Drehschieber ist zur Verlängerung oder Verkürzung des Strömungsweges nicht nur drehbar, sondern zusätzlich auch, in einer weiteren Dimension, linear verschieblich, so dass bei entsprechender Ansteuerung seines Antriebs seine Durchgangsöffnung entlang der Windungen des Ansaugkanals geführt und somit ein wesentlich größerer Bereich von Saugrohrlängen stufenlos eingestellt werden kann als beim Stand der Technik. Die gewundene Form des Ansaugkanals in Kombination mit dem innerhalb der Windungen angeordneten Drehschieber resultiert weiterhin in einer äußerst kompakten Bauweise, was gerade im Hinblick auf den im Motorraum eines Kraftfahrzeugs begrenzten Bauraum von großem Vorteil ist.

Durch die in den Unteransprüchen aufgeführten Maßnahmen sind vorteilhafte Weiterbildungen und Verbesserungen der im unabhängigen Patentanspruch angegebenen Erfindung möglich.

Der erfindungsgemäße Ansaugkanal kann von einer eingangs beschriebenen Schwingsaugrohraufladungseinrichtung umfasst und einem einzigen Zylinder zugeordnet sein. Bevorzugt ist der Ansaugkanal jedoch Teil einer Resonanzaufladungseinrichtung, bei welcher eine Gruppe von Zylindern über ein Saugrohr an einen Resonanzbehälter und dieser über den Ansaugkanal mit der Atmosphäre oder mit einem Sammelbehälter verbunden ist. Gerade für den Bereich der Resonanzaufladungseinrichtungen stellt die erfindungsgemäße stufenlose, über einen weiten Verstellbereich agierende Saugrohrlängenverstellung eine signifikante Neuerung gegenüber dem Stand der Technik dar, bei welchem bisher durch Öffnen oder Schließen von Klappen die Saugrohrlänge lediglich stufenweise variiert werden konnte. Beispielsweise erstreckt sich der gewundene Teil des Ansaugkanals über einen Winkelbereich von mehr als 360 Grad bis 720 Grad. Dann kann die Saugrohrlänge ausgehend von einer kleinsten Länge, der ein Winkel von Null Grad des Drehschiebers zugeordnet ist, bis zu einer größten Länge stufenlos verstellt werden, in welcher der Drehschieber eine Stellung von 720 Grad einnimmt und für welche der Drehschieber zugleich um ein bestimmtes Stück linear verschoben wird, um die zweite, von der ersten Windung um ein axiales Stück versetzte Windung des Strömungskanals zu erreichen.

Besonders bevorzugt wird der Drehschieber über einen Spindel-Muttertrieb in Richtung der mittigen Achse axial verstellt. Zur Realisierung der überlagerten Drehbewegung kann der Drehschieber über einen Schneckentrieb drehangetrieben werden, von welchem ein am Drehschieber koaxial gehaltenes Ritzel eine Linearbewegung quer zu einer drehgetriebenen Schnecke erlaubt, um die Linearbewegung des Drehschiebers gegenüber der festen Schnecke nicht zu behindern. Eine solche Lösung ist einfach und kostengünstig zu realisieren.

Da sich mit der kompakten Vorrichtung große Saugrohrlängen einstellen lassen, welche gerade bei niedrigen Motordrehzahlen und kleinen Ladedrücken eine merkliche Steigerung der Zylinderfüllung bewirken, eignet sie sich bevorzugt für turboaufgeladene Kolbenbrennkraftmaschinen, um deren Nachteile im Ansprechverhalten bei niedriger Last zu kompensieren. Je nach Motordrehzahl, Ladedruck und Ladelufttemperatur kann über den axial und in seiner Drehstellung verstellbaren Drehschieber eine optimale Saugrohrlänge eingestellt werden.

Die genaue Funktionsweise der erfindungsgemäßen Vorrichtung wird besser anhand der folgenden Beschreibung eines Ausführungsbeispiels klar.

### Zeichnungen

Ein Ausführungsbeispiel der Erfindung ist in der Zeichnung dargestellt und in der nachfolgenden Beschreibung näher erläutert. In der Zeichnung zeigt
- Fig.1: eine Draufsicht auf eine Ansaugvorrichtung für eine Kolbenbrennkraftmaschine mit Resonanzsaugrohrsystem gemäß einer bevorzugten Ausführungsform;
- Fig.2: einen Schnitt entlang der Linie II-II von Fig.1;
- Fig.3: einen Schnitt entlang der Linie III-III von Fig.1.

### Beschreibung des Ausführungsbeispiels

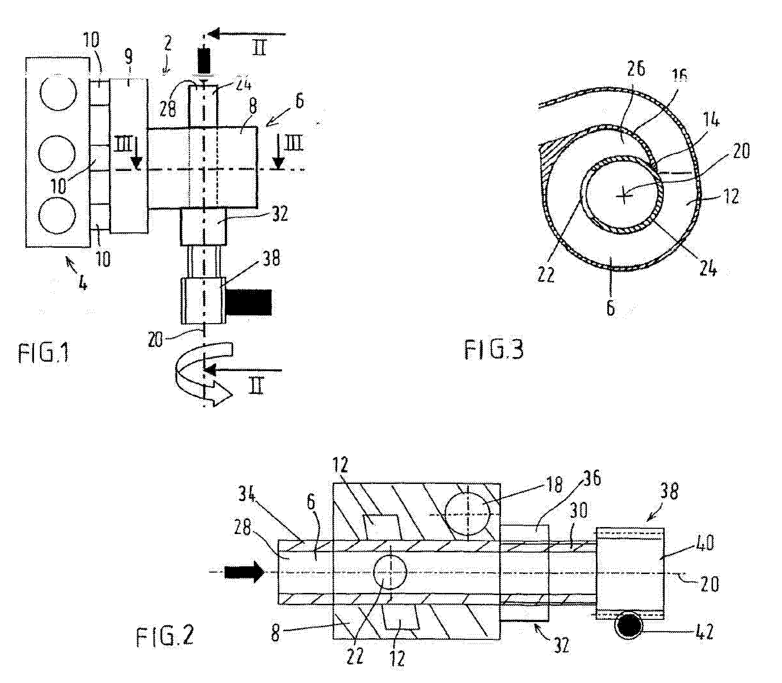

Das in Fig. 1 dargestellte bevorzugte Ausführungsbeispiel einer Ansaugvorrichtung 1 einer turboaufgeladenen Kolbenbrennkraftmaschine mit Resonanzsaugrohrsystem 2 beinhaltet hinsichtlich der Länge des Ansaugweges der Ansaugluft variable Ansaugkanäle, von welchen aus Maßstabsgründen lediglich ein drei Zylindern 4 einer Zylinderbank zugeordneter Ansaugkanal 6 gezeigt ist. Gemäß einer alternativen, hier nicht gezeigten Ausführungsform kann der Ansaugkanal 6 auch von einer Schwingsaugrohraufladungseinrichtung umfasst und einem einzigen der Zylinder 4 zugeordnet sein.

Zumindest ein Teil des Ansaugkanals 6 ist in einem Kanalblock 8 ausgebildet, der an einen Resonanzbehälter 9 angeflanscht oder mit diesem verblockt ist, welcher wiederum durch je ein kurzes Saugrohr 10 mit je einem Zylinder 4 in Strömungsverbindung steht. Der in dem Kanalblock 8 ausgebildete Teil 12 des Ansaugkanals 6 ist ähnlich einer Schraubenfeder einerseits in axialer Richtung spiralförmig gewunden, mit über eine Windung hinausgehender Länge, wie am besten aus Fig.2 hervorgeht. Andererseits hat der gewundene Teil 12 des Ansaugkanals 6 einen schneckenförmigen Querschnitt, wie Fig.3 zeigt.

Vorzugsweise erstreckt sich der gewundene Teil 12 des Ansaugkanals 6 ausgehend von einem dessen Beginn darstellenden Rand 14 einer inneren Wandung 16 über zwei Vollwindungen, d.h. über einen Winkel von etwa 720 Grad und mündet in einen Luftaustritt 18 an einer Seitenfläche des Kanalblocks 8, mit welcher dieser an den Resonanzbehälter 9 angeflanscht ist, so dass eine direkte Strömungsverbindung zwischen dem Kanalblock 8 und dem Resonanzbehälter 9 vorhanden ist. Anstatt zwei Windungen kann der gewundene Teil 12 des Ansaugkanals 6 auch kürzer, d.h. länger als eine Windung, aber kürzer als zwei Windungen, oder aber auch länger als zwei Windungen lang sein.

Im Zentrum oder koaxial zu einer bezogen auf die Windungen mittigen Achse 20 ist ein hohler, als weiterer Teil des Ansaugkanals 6 Ansaugluft führender und mit einer Durchgangsöffnung 22 in seiner Mantelwand versehener Drehschieber 24 angeordnet. Die innere, schneckenförmige Wandung 16 des Kanalblocks 8, deren freier Rand 14 zugleich den Beginn der Windungen darstellt und den Drehschieber 24 dort an seiner radial äußeren Umfangsfläche kontaktiert, verläuft nach einem sich trichterförmig erweiternden Abschnitt 26 zunächst etwa parallel zum Drehschieber 24, um sich danach bei etwa gleichem Querschnitt schneckenförmig fortzusetzen. Daher bildet die radial äußere Umfangsfläche des Drehschiebers 24 zugleich zumindest teilweise eine Wandung für den gewundenen Teil 12 des Ansaugkanals 6.

Der Drehschieber 24 ist beispielsweise als Hohlzylinder ausgebildet und einerseits um die mittige Achse 20 drehbar und andererseits in Richtung der mittigen Achse 20 derart axial verstellbar, dass die Durchgangsöffnung 22 des Drehschiebers 24 dem gewundenen Teil 12 des Ansaugkanals 6 zur Herstellung einer Strömungsverbindung ausgehend von einer Ausgangsstellung, in welcher der Strömungsweg der Ansaugluft am längsten ist bis zu einer Endstellung, in welcher der Strömungsweg der Ansaugluft am kürzesten ist, nachführbar ist. Dann kann die Ansaugluft den gewundenen Teil 12 des Ansaugkanals 6 ausgehend von der Durchgangsöffnung 22 des Drehschiebers 24 bis zum Luftaustritt 18 im Kanalblock 8 durchströmen, wobei die Länge des Strömungswegs zum einen von der Drehlage und zum andern von der axialen Position des Drehschiebers 24 abhängig ist, solange die Durchgangsöffnung 22 nur dem gewundenen Teil 12 des Ansaugkanals 6 folgt. Ein Ende des Drehschiebers 24 wirkt als Lufteintritt 28, wie durch den Pfeil in Fig.2 symbolisiert ist, und ist mit der Atmosphäre oder mit einem Luftsammelbehälter verbunden. Das andere Ende 30 des Drehschiebers 24 ist indes verschlossen. Dann kann die über den Lufteintritt 28 ins Innere des hohlen Drehschiebers 24 angesaugte Ansaugluft den gewundenen Teil 12 des Ansaugkanals 6 ausgehend von der Durchgangsöffnung 22 bis zum Luftaustritt 18 im Kanalblock 8 durchströmen.

Beispielsweise ist der Drehschieber 24 über einen Mutter-Spindeltrieb 32 in Richtung der Achse 20 axial verstellbar, wobei der Drehschieber 24 die axial verschieblich geführte Spindel 34 mit einem Steilgewinde bildet, auf welchem eine beispielsweise durch einen Elektromotor drehgetriebene Mutter 36 verschraubbar ist, so dass eine Drehbewegung der Mutter 36 eine Axialbewegung des Drehschiebers 24 als Spindel 34 verursacht. Die dieser Axialbewegung überlagerte Drehbewegung des Drehschiebers 24 kann durch einen Schneckentrieb 38 realisiert sein, mit einem am verschlossenen Ende 30 des Drehschiebers 24 koaxial gehaltenen Ritzel 40, welches eine Linearbewegung quer zu einer beispielsweise ebenfalls durch einen Elektromotor drehgetriebenen Schnecke 42 erlaubt, damit sich der Drehschieber 24 axial bewegen kann. Die Ansteuerung des elektrischen Antriebs des Drehschiebers 24 erfolgt vorzugsweise durch die Motorsteuerung. Je nach Motordrehzahl, Ladedruck und Ladelufttemperatur kann über den axial und in seiner Drehstellung verstellbaren Drehschieber 24 eine optimale Saugrohrlänge eingestellt werden. Die jeweilige Optimallage des Drehschiebers kann beispielsweise aus einem Kennfeld über der Motordrehzahl und Ladeluftdichte ausgelesen werden und ein entsprechendes Steuersignal für den elektrischen Antrieb des Drehschiebers erzeugt werden. Bei kleiner Motordrehzahl und sehr kleinem Ladedruck ist beispielsweise eine relativ große Saugrohrlänge für die dynamische Aufladung günstig, während bei hohen Motordrehzahlen und hohem Ladedruck eine kleine Saugrohrlänge den gewünschten Effekt bringt.

## Patentansprüche

1. Ansaugvorrichtung (1) für eine Kolbenbrennkraftmaschine mit mehreren Zylindern (4), beinhaltend wenigstens einen hinsichtlich der Länge des Ansaugweges der Ansaugluft variablen Ansaugkanal (6), **dadurch gekennzeichnet, dass** ein Teil (12) des Ansaugkanals (6) axial spiralförmig gewunden, mit über eine Windung hinausgehender Länge und im Querschnitt schneckenförmig ausgebildet ist, wobei koaxial zu einer bezogen auf die Windungen mittigen Achse (20) ein hohler, als weiterer Teil des Ansaugkanals (6) Ansaugluft führender und mit einer Durchgangsöffnung (22) in seiner Mantelwand versehener Drehschieber (24) um die mittige Achse (20) drehbar und zugleich in Richtung der mittigen Achse (20) derart axial verstellbar ausgebildet ist, dass die Durchgangsöffnung (22) des Drehschiebers (24) dem gewundenen Teil (12) des Ansaugkanals (6) zur Herstellung einer Strömungsverbindung ausgehend von einer Ausgangsstellung, in welcher der Strömungsweg der Ansaugluft am längsten ist bis zu einer Endstellung, in welcher der Strömungsweg der Ansaugluft am kürzesten ist, nachführbar ist.

2. Ansaugvorrichtung nach Anspruch 1, **dadurch gekennzeichnet, dass** der Ansaugkanal (6) Bestandteil einer Schwingsaugrohraufladungseinrichtung und einem einzigen Zylinder zugeordnet ist.

3. Ansaugvorrichtung nach Anspruch 1, **dadurch gekennzeichnet, dass** der Ansaugkanal (6) Bestandteil einer Resonanzaufladungseinrichtung (2) ist, bei welcher eine Gruppe von Zylindern (4) über je ein Saugrohr (10) an einen Resonanzbehälter (9) und dieser über den Ansaugkanal (6) mit der Atmosphäre oder mit einem Sammelbehälter verbunden ist.

4. Ansaugvorrichtung nach Anspruch 3, **dadurch gekennzeichnet, dass** der Drehschieber (24) als Hohlzylinder ausgebildet ist, welcher einendseitig mit der Atmosphäre oder mit dem Sammelbehälter verbunden und anderendseitig verschlossen ist.

5. Ansaugvorrichtung nach Anspruch 4, **dadurch gekennzeichnet, dass** der gewundene Teil (12) des Ansaugkanals (6) in einem Kanalblock (8) ausgebildet ist und die Ansaugluft den gewundenen Teil (12) ausgehend von der Durchgangsöffnung (22) des Drehschiebers (24) bis zu einem Luftaustritt (28) im Kanalblock (8) durchströmt.

6. Ansaugvorrichtung nach Anspruch 5, **dadurch gekennzeichnet, dass** der Kanalblock (8) an den Resonanzbehälter (9) angeflanscht oder mit diesem verblockt ist.

7. Ansaugvorrichtung nach Anspruch 6, **dadurch gekennzeichnet, dass** eine innere Wandung (16) des Kanalblocks (8) eine radial äußere Umfangsfläche des Drehschiebers (24) dichtend kontaktiert.

8. Ansaugvorrichtung nach Anspruch 7, **dadurch gekennzeichnet, dass** zumindest ein Teil der radial äußeren Umfangsfläche des Drehschiebers (24) eine Wandung des gewundenen Teils (12) des Ansaugkanals (6) bildet.

9. Ansaugvorrichtung nach wenigstens einem der vorhergehenden Ansprüche, **dadurch gekennzeichnet, dass** der Drehschieber (24) über einen Mutter-Spindeltrieb (32) in Richtung der mittigen Achse (20) axial verstellbar ist.

10. Ansaugvorrichtung nach wenigstens einem der vorhergehenden Ansprüche, **dadurch gekennzeichnet, dass** der Drehschieber (24) über einen Schneckentrieb (38) drehantreibbar ist, von welchem ein am Drehschieber (24) koaxial gehaltenes Ritzel (40) eine Linearbewegung quer zu einer drehgetriebenen Schnecke (42) erlaubt.

11. Ansaugvorrichtung nach wenigstens einem der vorhergehenden Ansprüche, **dadurch gekennzeichnet, dass** sich der gewundene Teil (12) des Ansaugkanals (6) über einen Winkelbereich von mehr als 360 Grad erstreckt.

12. Turboaufgeladene Kolbenbrennkraftmaschine beinhaltend eine Ansaugvorrichtung (1) nach wenigstens einem der vorhergehenden Ansprüche.
